# EUROPEAN PATENT APPLICATION

(11) **EP 1 580 237 A1**
(43) Date of publication of application: **28.09.2005**
(21) Application number: 05075514.9
(22) Date of filing: 02.03.2005
(51) Int. Cl.: C08L 97/02, C08L 3/00, B65D 65/46, B29C 67/24

(54) **Process for the production of packages using thermoplastic biodegradable cassava bagasse agglomerate**

(30) Priority: 03.03.2004 BR 0400842
(71) Applicant: Lazzaro, Evàsio, Sao Paulo (BR); Neves, Juarez Teodoro, Botucatu SP (BR); Montanari, Luis Antonio Duarte, Curitiba PR (BR)
(72) Inventor: Lazzaro, Evàsio, Sao Paulo (BR); Neves, Juarez Teodoro, Botucatu SP (BR); Montanari, Luis Antonio Duarte, Curitiba PR (BR)
(74) Representative: Checcacci, Giorgio

(57) **Abstract**

The present invention refers to a process for obtaining thermoplastic biodegradable cassava bagasse-based material agglutinated with cassava starch, intended for the production of 100% non-toxic biodegradable packages that, after use, may be incorporated to animal food. The process basically consists in agglomerating cassava bagasse agglutinated using a cassava starch paste *in natura* (whether pregelatinized or not) that, in the presence of a solvent and subject to a source of heat, causes an expansion associated to agglutination among the cassava bagasse particles.

## Description

The present invention refers to the process of obtaining thermoplastic biodegradable cassava bagasse-based material agglutinated with cassava starch, being completely non-toxic for the human health and, after use, may be incorporated to animal food.

### Description of the prior art

As a result of the increasing amount of solid, liquid and gaseous wastes that pollute the environment, leading to its degradation, the man has been seeking for biodegradable products, especially the plastic materials. The practicability of this product, however, is proportional to the environmental problem its use causes, since the petrochemical plastic takes from 100 to 400 years to decompose. When disposed in dumps and landfills, it creates an impermeable layer that impairs the decomposition of biologically degradable materials, preventing the circulation of liquids and gases.

Generally, a plastic is regarded as degradable when its structure or formulation includes components that slightly accelerate the degradation rates whether obtained by mechanisms such as photodegradation [M1], biodegradation [M2], physical [M3] or chemical degradation. Thus, biodegradability is deeply affected by the chemical composition of the plastic, its morphology, medium conditions, the presence of additives in its formulation and other favorable and unfavorable factors to decomposition.

One of the known alternatives for obtaining biodegradable plastics is the addition of starch to petrochemical polymers. Polystyrene, PVC and high- and low-density polyethylene when mixed with starch result in a polymeric mixture with appropriate characteristics to certain applications, since their mechanical properties are decreased, thus restricting its applicability. Additionally, biodegradability of these plastics is questionable, since only starch is degraded simply causing the fragmentation of the original polymer in smaller sizes [M4]. Further, plastics thus obtained have a prohibitive cost if compared to conventional plastics.

Another method to obtain biodegradable plastics is using starch mainly extracted from cassava, corn or potato, resulting in a 100% organic plastic resin which deteriorates by the action of microorganisms in contact with the soil, organic wastes or composting mediums and landfills that, within a period of 40 to 120 days, becomes a organic compound that may be used as humus for fertilization purposes. Resins thus obtained also have restricted applications as a result of the low mechanical resistance, curing time and consequent high cost.

Another way to obtain biodegradable plastic material is using sugarcane in a composition of sugar with cane bagasse. The material thus obtained may be handled by injection and extrusion, thus improving the applications scope. However, yield is low since approximately 20 kg of raw material are required for each kg of plastic material. It does not definitely solve the prior art drawbacks.

### Object of the invention

The object of the present invention is to introduce a process for obtaining thermoplastic biodegradable cassava bagasse-based material agglutinated with cassava starch, intended for the production of 100% non-toxic biodegradable packages that, after use, may be incorporated to animal food. This object is reached through a process that agglomerates cassava bagasse agglutinated using a cassava starch paste *in natura* (whether pregelatinized or not) that, in the presence of a solvent and subject to a source of heat, causes an expansion associated to agglutination among the cassava bagasse particles.

### Detailed description of the invention

The present invention solves the prior art drawback by processing cassava starch and bagasse. This process is detailed below.

First, the binding agent is prepared by mixing cassava starch at 2 to 20% in water, alcohol or another similar non-toxic solvent. The mixture is subject to temperatures ranging from 40 to 80°C until gelatinization that may range from semi-liquid to semi-pasty, the viscosity of which is adjusted according to the conveying equipment and the desired final product requirements.

Next, the binding agent is added to the cassava bagasse, forming a mixture ranging from 55% of cassava bagasse and 45% of binding agent to 80% of cassava bagasse and 20% of binding agent on the dry bagasse weight. The mixture is then subject to strong mechanical stirring until a homogeneous mass is obtained.

Finally, the homogenous mass thus obtained from the mixture of cassava bagasse and previously gelatinized cassava starch is conveyed to heated dies from 150 to 300°C where it can be introduced by injection or leakage. Thermoforming time ranges from 30 to 300 seconds as a result of the mass thickness, density and temperature.

The resulting final product is mainly intended for use in packages for several purposes, the walls thickness of which may range from one to thirty millimeters. Since the product is totally non-toxic to the human health, it may be incorporated to animal food after use or disposed with no harm to the environment since it is totally biodegradable.

During processing, it is possible to add natural colors to the cassava bagasse and starch mixture, thus providing different colors to the final product, without losing the biodegradable and non-toxic features.

After describing an example of a preferred embodiment, it should be understood that the scope of the present invention includes other possible variants, being limited to the attached claims including the possible equivalents.

## Claims

1. Process for the production of packages using thermoplastic biodegradable cassava bagasse agglomerate, **characterized in that** it comprises the following steps:
- preparation of a binding agent;
- addition of the binding agent to the cassava bagasse;
- injection or leakage of the abovementioned mixture.

2. Process according to claim 1, **characterized in that** the binding agent is prepared by mixing cassava starch at 2 to 20% in water, alcohol or another similar non-toxic solvent.

3. Process according to claim 2, **characterized in that** the mixture of cassava starch in water, alcohol or another similar non-toxic solvent is subject to temperatures ranging from 40 to 80°C until gelatinization that may range from semi-liquid to semi-pasty.

4. Process according to claim 1, **characterized in that** the binding agent is added to the cassava bagasse, forming a mixture ranging from 55% of cassava bagasse and 45% of binding agent to 80% of cassava bagasse and 20% of binding agent on the dry bagasse weight.

5. Process according to claim 4, **characterized in that** the mixture of binding agent and cassava bagasse is then subject to strong mechanical stirring until a homogeneous mass is obtained.

6. Process according to claim 1, **characterized in that** the homogenous mass obtained from the mixture of cassava bagasse and cassava starch is conveyed to heated dies from 150 to 300°C where it can be introduced by injection or leakage.

7. Process according to claim 6, **characterized in that** thermoforming time ranges from 30 to 300 seconds.

8. Process according to claim 1, **characterized in that** natural colors may be added to the cassava bagasse and starch mixture.
